# EUROPÄISCHE PATENTSCHRIFT

(11) **EP 3 231 519 B1**
(45) Veröffentlichungstag und Bekanntmachung des Hinweises auf die Patenterteilung: **02.10.2019**
(21) Anmeldenummer: 16164884.5
(22) Anmeldetag: 12.04.2016
(51) Int. Cl.: B05D 7/06, B05D 7/08, B41M 1/26, B41M 1/38, B41M 5/00, C09D 133/06, C09D 161/00, C09D 163/00, C09D 167/00, C09D 175/04, E04F 15/02

(54) **HOLZWERKSTOFFPLATTE MIT MODIFIZIERTER HARZSCHICHT UND VERFAHREN ZU DEREN HERSTELLUNG**
COMPOSITE WOOD BOARD WITH MODIFIED RESIN LAYER AND METHOD FOR THE MANUFACTURE THEREOF
PLAQUE EN MATERIAU DERIVE DU BOIS COMPRENANT UNE COUCHE DE RESINE MODIFIEE ET SON PROCEDE DE FABRICATION

(43) Veröffentlichungstag der Anmeldung: 18.10.2017
(73) Patentinhaber: Flooring Technologies Ltd., Kalkara SCM1001 (MT)
(72) Erfinder: Dr. GIER, Andreas, 66399 Mandelbachtal (DE); Dr. KALWA, Norbert, 32805 Horn-Bad Meinberg (DE)
(74) Vertreter: Maikowski & Ninnemann Patentanwälte Partnerschaft mbB

(56) Entgegenhaltungen:
- EP-A1- 2 447 332
- EP-A1- 2 452 829
- EP-A1- 2 774 770

## Beschreibung

Die vorliegende Erfindung betrifft eine Holzwerkstoffplatte nach dem Oberbegriff des Anspruchs 1, und ein Verfahren zur Herstellung der Holzwerkstoffplatte nach Anspruch 14.

### Beschreibung

Bei vielen Produkten, die als Produkte im Innenausbau genutzt werden, besteht ein wesentliches Problem darin, dass diese mechanischen Beanspruchungen unterworfen sind. Diese treten entweder unvermeidlich durch die Nutzung auf oder durch kleinere oder größere "Unfälle" wie herabfallende oder dagegen fallende Gegenstände. Bei den Produkten handelt es sich beispielsweise um Laminatböden, Tisch- und Arbeitsplatten, Möbel, Wandpaneele usw.

Derartige Holzwerkstoffprodukte, insbesondere in Form von Holzwerkstoffplatten, weisen üblicherweise eine Oberfläche aus einem ausgehärteten Kunstharz auf. Insbesondere sind melaminbeschichtete Oberflächen im industriellen Fußboden- und Möbelbereich eine der am häufigsten auftretenden Oberflächen.

Das zur Beschichtung verwendete Melaminharz ist aufgrund seines hohen Vernetzungsgrades mechanisch sehr stabil, aber auch sehr spröde. Dies kann bei Stoßbeanspruchung leicht zu Rissen führen, welche ähnlich wie bei Glasprodukten nicht reparabel sind.

Durch die Weiterentwicklung der Melaminharz-Technologie tritt ein weiteres Problem auf. So wurden früher bei den genannten Holzwerkstoffprodukten zur Verstärkung der obersten Melaminharz-Schicht sogenannte Overlaypapiere eingesetzt, die aus einem α-cellulosehaltigen Papier bestehen. Dieses transparente Papier stellte eine Faserarmierung und zusätzlichen Schutz des Melaminharzes vor Beanspruchung dar, was auch an den normierten Prüfergebnissen erkennbar war. Ein Holzwerkstoffprodukt mit Overlaypapier erreichte bei Prüfungen im Hinblick auf seine mechanische Beständigkeit deutlich bessere Ergebnisse als ein Holzwerkstoffprodukt ohne Overlaypapier. Der Einsatz von Overlaypapier ergab sich allein schon aus der Tatsache, dass für die verschiedenen Holzwerkstoffprodukte wie Arbeitsplatte (DIN EN 438), Laminatboden (DIN EN 13329) usw. in den Normen bereits konkrete Vorgaben für das Verhalten gegenüber Stoßbeanspruchung gemacht wurden.

Heute versucht man aus technologischen Gründen und aus Kostenaspekten den Einsatz von Overlaypapieren zu vermeiden. Zum einen führt diese zusätzliche Papierlage vor allem bei dunklen Dekoren zu Transparenzverschlechterungen, zum anderen erzeugen Harzschichten bei der Aushärtung durch den chemisch bedingten Schrumpf des Melaminharzes eine Spannung. Diese wirkt auch auf das Trägermaterial und kann zu Schüsselungen der Produkte führen. Des Weiteren ist eine zusätzlich beharzte Papierlage auch mit höheren Kosten verbunden.

Die Versuche durch Weglassen der Overlaypapierlage ebenfalls normenkonforme Produkte zu erzeugen, haben bisher aber keine positiven Ergebnisse gezeigt. Unter anderem wurde versucht dem Melaminharz Cellulosefasern beizumischen. Dies führt aber häufig zu Klumpenbildung und hat auf das Verhalten gegenüber Stoßbeanspruchung keinen nachhaltigen Einfluss. Auch eine Elastifizierung des Melaminharzes durch Weichmacher bringt keine Verbesserung, da bei der Normprüfung für Laminatböden neben der Beschädigung der Oberfläche auch die Größe der durch die Kugel erzeugten Eindruckkalotte ein Bewertungskriterium ist. Die elastifizierte Oberfläche reißt nicht mehr so schnell, dafür vergrößert sich die Eindruckkalotte gegenüber unelastifizierten Oberflächen. Entsprechend weisen derartige Holzwerkstoffprodukte schlechte Ergebnisse im Kugelfalltest (d.h. eine schlechte Stoßbeanspruchung) auf. Das Dokument EP 2 774 770 A1 betrifft ein Verfahren zum Bedrucken von Holzwerkstoffplatten und eine Holzwerkstoffplatte mit aufgedruckter Dekorschicht. Gemäß EP 2 774 770 A1 wird zunächst auf die bedruckte Seite der Holzwerkstoffplatte eine erste Schutzschicht umfassend mindestens einen strahlungshärtbaren Lack (Polyacrylat) und/ oder mindestens ein Polyurethan aufgetragen, angeliert und anschließend auf die angelierte erste Schutzschicht umfassend mindestens einen strahlungshärtbaren Lack und/oder mindestens ein Polyurethan mindesten eine zweite Schutzschicht aus mindestens einem wasserverträglichen Harz, bevorzugt aus einem Formaldehyd-haltigen Harz aufgetragen.

Der Erfindung lag daher die technische Aufgabe zugrunde eine Melaminoberfläche für Holzwerkstoffplatten bereitzustellen, die bei der Prüfung des Verhaltens gegenüber Stoßbeanspruchung (Kugelfalltest) ein verbessertes Ergebnis liefern. Dies sollte allerdings nicht zu einer Verkomplizierung des Beschichtungsprozesses führen. Auch die Verwendung von Rezepturen mit organischen Lösemitteln sollte vermieden werden. Eine wesentliche Verteuerung der Rezepturen sollte ebenfalls nicht erfolgen.

Diese Aufgabe wird erfindungsgemäß mit einer Holzwerkstoffplatte mit den Merkmalen des Anspruchs 1 gelöst.

Entsprechend wird eine Holzwerkstoffplatte mit modifizierter Harzschicht bereitgestellt, wobei die Holzwerkstoffplatte
- mindestens eine Trägerplatte,
- mindestens eine auf einer Seite der Trägerplatte aufgedruckte Dekorschicht, und
- mindestens eine auf der aufgedruckten Dekorschicht angeordnete Harzschicht umfasst, wobei die mindestens eine Harzschicht
   - mindestens ein Formaldehydharz,
   - mindestens ein Polymer ausgewählt aus einer Gruppe enthaltend Polyacrylate, Polyepoxide, Polyester, Polyurethane und langkettige Silanole, und
   - mindestens eine Silanverbindung der allgemeinen Formel (I)

      **RₐSiX₍₄₋ₐ₎** **(I)**,

      und/oder deren Hydrolyseprodukt umfasst, wobei
   - X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
   - R ein nicht-hydroliserbarer organischer Rest R ist ausgewählt aus der Gruppe umfassend Alkyl, Aryl, Alkenyl, Alkinyl, Cycloalkyl, die durch -O- oder -NHunterbrochen sein können, und
   - wobei R mindestens eine funktionelle Gruppe Q aufweisen kann, die ausgewählt ist aus einer Gruppe enthaltend eine Hydroxy-, Ether-, Amino-, Monoalkylamino-, Dialkylamino-, Anilino-, Amid-, Carboxy-, Mercapto-, Alkoxy-, Aldehyd-, Alkylcarbonyl-, Epoxid-, Alkenyl-, Alkinyl-, Acryl-, Acryloxy-, Methacryl-, Methacryloxy-, Cyano- und Isocyano-Gruppe, und
   - a = 0, 1, 2, 3, insbesondere 0, 1 oder 2 ist.

Die Silanverbindungen der allgemeine Formel (I) und die Polymere lassen sich gut in die Formaldehydharze, wie z.B. wässrige Melamin-Formaldehyd-Harze einarbeiten, führen zu keinerlei Transparenzstörungen und haben bereits in relativ geringer Dosierung einen deutlichen Einfluss auf das Verhalten gegenüber Stoßbeanspruchung. Ein weiterer Pluspunkt ist, dass sich insbesondere bedingt durch die Zugabe des Polymers die Haptik der Oberflächen der Holzwerkstoffplatten ebenfalls positiv verändert. Die Oberflächen der vorliegenden Holzwerkstoffplatten fühlen sich im Vergleich zu Oberflächen von Holzwerkstoffplatten ohne Modifizierung der Harzschicht deutlich wärmer und angenehmer an. Insgesamt weisen die vorliegenden Holzwerkstoffplatten eine verbesserte Stoßfestigkeit, insbesondere nachweisbar im großen Kugelfalltest, eine bessere und angenehmere Haptik und eine im Vergleich zu Oberflächen mit Overlaypapieren verbesserte Transparenz auf.

In einer besonders bevorzugten Ausführungsform ist zwischen der (im Direktdruck) aufgedruckten Dekorschicht und der Silane und Polymere umfassenden Formaldehydharzschicht keine weitere Zwischenschicht oder Zwischenlage vorgesehen; d.h. im Falle der vorliegenden Holzwerkstoffplatte ist die modifizierte Harzschicht unmittelbar und direkt auf den Dekordruck auf der Trägerplatte angeordnet.

Im Sinne der vorliegenden Anmeldung ist es für einen Fachmann ersichtlich, dass die Hydrolyseprodukte der Silanverbindung der allgemeinen Formel (I) sich unter der allgemeinen Formel (II) O_{b}X_{c}(OH)_{d}RₑSiO(4-b-c-d-e)/2 mit b, c, d = 0 oder 1 und e = 1, 2, 3 zusammenfassen lassen können. Die Hydrolyse und/oder Kondensation der Verbindungen der allgemeinen Formel (I) wird durch die Reaktionsbedingungen, insbesondere durch saure Reaktionsbedingungen während der Harzherstellung bedingt und beeinflusst.

In der mindestens einen Harzschicht sind mindestens zwei polymerisationsfähige bzw. polymere Komponenten, d.h. ein Formaldehydharz und ein weiteres reaktionsfähiges Polymer, und eine Silanverbindung enthalten. Die Harzschicht stellt demnach ein 3-Komponentensystem dar. Die Harzschicht kann auch als eine modifizierte (Hybrid)harzschicht charakterisiert werden.

Das in der vorliegenden Harzschicht verwendete Formaldehydharz ist bevorzugt ein noch nicht vollständig ausgehärtetes Formaldehydharz und weist entsprechend noch freie OH-Gruppen und z.B. im Falle eines Melamin-Formaldehyd-Harzes neben den freien OH-Gruppen auch freie NH₂-Gruppen auf. Bevorzugt weist das zum Einsatz kommende Formaldehyd-Harz Prekondensate und Oligomere auf. Der Kondensationsgrad des verwendeten Formaldehydharzes, bevorzugt eines Melamin-Formaldehyd-Harzes, entspricht bevorzugt einer Wasserverträglichkeit bei 25°C von 1: 1.7-2.2 (Verhältnis Volumen Harz:Wasser).

Die in der vorliegenden Harzschicht verwendeten Polymere weisen bevorzugt eine reaktionsfähige Gruppe, wie Carboxylgruppe oder OH-Gruppe auf. Der Anteil an freien OH-Gruppen im Polymer kann zwischen 5 und 15 Gew%, bevorzugt zwischen 8 und 12 Gew% betragen. Im Falle der Verwendung von Polyurethan als Polymer liegt der Gehalt an freien OH-Gruppen z.B. bei 9,5 Gew%.

Die Polymere werden in Abhängigkeit von der gewünschten Stoßfestigkeit und haptischen Eigenschaft ausgewählt.

Die in der vorliegenden Harzschicht verwendete Silanverbindung bzw. silanhaltige Verbindung der allgemeinen Formel (I) dient als Mittler zwischen dem Formaldehyd-Harz und dem Polymer. So ermöglichen die funktionellen Gruppen der Silanverbindung eine chemische Verbindung mit den jeweiligen reaktiven Gruppen des Formaldehyd-Harzes und des Polymers, wodurch eine gleichmäßige und homogene Mischung der verschiedenen Komponenten sichergestellt wird.

Bevorzugt werden zwei oder mehr Silanverbindungen in der Harzschicht verwendet. Entsprechend kann die mindestens eine Harzschicht mindestens zwei unterschiedliche Silane dar allgemeinen Formel (I) umfassen.

In einer Ausführungsform der vorliegenden Holzwerkstoffplatte ist die Trägerplatte eine Platte aus einem Holzwerkstoff, einem Holzwerkstoff-Kunststoff-Gemisch oder einem Verbundwerkstoff, insbesondere eine Span-, mitteldichte Faser(MDF)-, hochdichte Faser (HDF)-, Grobspan (OSB)- oder Sperrholzplatte, eine Zementfaserplatte, Gipsfaserplatte und/oder eine WPC-Platte (wood plastic composite).

In einer weiteren Ausführungsform ist das in der mindestens einen Harzschicht verwendete Formaldehyd-Harz ein Melamin-Formaldehyd-Harz, ein Melamin-Harnstoff-Formaldehyd-Harz oder ein Harnstoff-Formaldehyd-Harz.

Es ist weiterhin vorgesehen, wenn in der mindestens einen Harzschicht Poly(metha)crylate als Polyacrylat, aliphatische Polyepoxide (Polyalkyldiepoxide) oder aromatische Polyepoxide wie Bisphenol-basierte Polyepoxide als Polyepoxide, aliphatische Polyurethane als Polyurethane verwendet werden. Als Silanole kommen langkettige Silanole mit einer Moleküllänge von mindestens 20 Monomereinheiten, bevorzugt von mindestens 50 Monomereinheiten zum Einsatz.

Das Polymer wird bevorzugt als wässrige Suspension verwendet, die in geeigneter Weise stabilisiert wird.

In einer weiteren Ausführungsform beträgt der Mengenanteil an Polymer in der vorliegenden Harzschicht mindestens 20 Gew%, bevorzugt mindestens 30 Gew%, insbesondere bevorzugt mindestens 50 Gew%. Entsprechend liegt das Masseverhältnis von Formaldehydharz und Polymer in einem Bereich zwischen 20 : 80, bevorzugt 30 : 70, insbesondere bevorzugt 50 : 50.

Der Mengenanteil an Silanverbindung in der Harzschicht beträgt mindestens 3 Gew%, bevorzugt 5 Gew%, weiterhin bevorzugt mindestens 10 Gew%. Insbesondere ist ein Mengenanteil zwischen 10 und 20 Gew% bezogen auf den Feststoffgehalt der Suspension bevorzugt.

Der in der Silanverbindung der allgemeinen Formel (I) beschriebene Rest X ist vorteilhafterweise ausgewählt aus einer Gruppe enthaltend Fluor, Chlor, Brom, lod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆. Besonders bevorzugte hydrolysierbare Gruppen sind C₁₋₄ Alkoxygruppen, insbesondere Methoxy und Ethoxy.

In einer bevorzugten Ausführungsform ist X ausgewählt aus einer Gruppe enthaltend OH, C₁₋₆-Alkoxy, insbesondere Methoxy, Ethoxy, n-Propoxy und Butoxy.

Der nicht- hydrolisierbare Rest R ist bevorzugt ausgewählt aus einer Gruppe umfassend C₁-C₃₀-Alkyl, insbesondere C₅-C₂₅-Alkyl, C₂-C₆-Alkenyl, C₂-C₆-Alkinyl und C₆-C₁₀-Aryl.

In einer Ausführungsform ist der nicht-hydrolisierbare Rest R ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Phenyl und Naphthyl.

Unter dem Begriff "nicht-hydrolysierbarer organischer Rest" ist vorliegend ein organischer Rest zu verstehen, der in Gegenwart von Wasser nicht zur Bildung einer mit dem Si-Atom verknüpften OH-Gruppe oder NH₂-Gruppe führt.

Die mindestens eine funktionelle Gruppe Q, die im organischen nicht-hydrolisierbaren Rest R enthalten sein kann, umfasst vorteilhafterweise ein Epoxid-, insbesondere ein Glycidyl- oder Glycidyloxy-Gruppe, ein Amin- oder eine Isocyano-Gruppe.

Die Auswahl der geeigneten funktionellen Gruppe Q erfolgt bevorzugt in Abhängigkeit von dem verwendeten Polymer. So ist im Falle der Verwendung eines Polyacrylates als Polymer eine Silan-Verbindung mit einer Methacryl- oder Methacryloxy-Gruppe als funktionelle Gruppe Q von Vorteil. Bei Verwendung eines Polyepoxids als Polymer wird bevorzugt eine Silan-Verbindung mit einer Epoxy-Gruppe als funktionelle Gruppe zum Tragen kommen.

In einer besonders bevorzugten Ausführungsform werden als Silane Tetraethoxysilan oder Methyltriethoxysilan oder auch Gamma-Isocyanatopropyltriethoxysilan oder ein Gycidyloxypropyltriethoxysilan verwendet.

Wie beschrieben, kann der nicht-hydrolisierbare Rest R über mindestens eine funktionelle Gruppe Q verfügen. Darüber hinaus kann der Rest R auch mit weiteren Resten substituiert vorliegen. Folgende Reste oder Substituenten können dabei vorliegen: Halogen, Hydroxy, geschütztes Hydroxy, Oxo, geschütztes Oxo, C₃-C₇-Cycloalkyl, bicyclisches Alkyl, Phenyl, Naphtyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie vorliegend verwendet, bezeichnet einen Rest der Formel R-C=C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie vorliegend verwendet, bezeichnet aromatische Kohlenwasserstoffe, beispielsweise Phenyl, Benzyl, Naphthyl, oder Anthryl. Substituierte Arylgruppen sind Arylgruppen, die mit einem oder mehreren Substituenten, wie oben definiert, substituiert sein können.

Der Begriff "Cycloalkyl" umfasst die Gruppen Cyclopropyl, Cyclobutyl, Cyclopentyl, Cyclohexyl und Cycloheptyl.

In einer weiteren Ausführungsform ist vorgesehen, dass mehr als eine Harzschicht, bevorzugt zwei, drei oder vier Harzschichten, auf dem Trägermaterial angeordnet sind. Im Falle von mehr als einer Harzschicht können die Harzschichten die gleiche oder eine andere Zusammensetzung aufweisen. Bei einem mehrschichtigen Aufbau können die einzelnen Harzschichten demnach aus verschiedenen Hybridharzen bestehen und auf diese Weise können unterschiedliche Eigenschaften eingestellt werden.

In einer weitergehenden Ausführungsform des vorliegenden Trägermaterials ist vorgesehen, dass in der Harzschicht Nanopartikel mit einer Größe kleiner 500 nm verwendet werden. Die verwendeten Nanopartikel weisen eine Größe zwischen 2 und 400 nm, bevorzugt zwischen 2 bis 100 nm, insbesondere bevorzugt zwischen 2 bis 50 nm auf. Die Partikel können insbesondere von oxidischer, hydroxidischer oder oxihydroxidischer Natur sein, die über unterschiedliche Verfahren wie zum Beispiel Ionenaustauschprozess, Plasma-Prozess, Sol-GelVerfahren, Vermahlung oder auch Flammabscheidung, hergestellt werden können. In einer bevorzugten Ausführungsform werden Partikel auf Basis von SiO₂, Al₂O₃, ZrO₂, TiO₂, SnO verwendet.

Es ist ebenfalls vorgesehen, dass die mindestens eine Harzschicht Füllstoffe, Netzmittel oder weitere Additive umfasst.

Die Füllstoffe sind vorliegend ausgewählt aus einer Gruppe enthaltend Fasern, verschleißhemmende Materialien, leitfähige Substanzen, wärmeleitfähige Materialien, Materialien zur Anpassung der Haptik oder Materialien zur Reduzierung von Abdrücken z.B. von Fingerabdrücken.

Zur Verbesserung der Abrieb-/Verschleißfestigkeit der Harzschicht können der Harzschicht verschleißhemmende Partikel zugegeben werden. Diese können u. a. aus Aluminiumoxid (Korund), Carbiden z.B. Borcarbiden, Siliziumcarbiden, Siliziumdioxid und/oder Glaskugeln bestehen. Wichtig ist dabei, dass die Größe der Partikel auf die Auftragsmenge der Harzschicht abgestimmt ist. Die Größe der verschleißhemmenden Partikel kann im Bereich zwischen 1 und 20 µm, bevorzugt 5 und 15 µm, insbesondere bevorzugt zwischen 7 und 12 µm liegen. Bei einer Schichtdicke der Harzschicht von z. B. 10 - 12 µm sollten die verschleißhemmenden Materialien Partikelgrößen von 8 - 10 µm nicht überschreiten.

Neben den abriebfesten Partikeln können in der Harzschicht auch weitere Füllstoffe oder Additive, wie natürliche oder synthetische Fasern, Flammschutzmittel und/oder luminiszierende, antibakterielle Stoffe vorhanden sein.

Geeignete Flammschutzmittel können ausgewählt sein aus der Gruppe enthaltend Phosphate, Borate, insbesondere Ammoniumpolyphosphat, Tris(tri-bromneopentyl)phosphat, Zinkborat oder Borsäurekomplexe von mehrwertigen Alkoholen.

Als luminiszierende Stoffe können fluoreszierende oder phosphorisierende Stoffe, insbesondere Zinksulfit und Alkalialuminate und Silberverbindungen als Antibakterium zum Einsatz kommen. Die luminiszierenden Stoffe können in geometrischen Formen durch Schablonen auf die Oberfläche aufgetragen werden. Durch das Einarbeiten dieser Farbstoffe in die Oberfläche von Werkstoffplatten, die als Fußboden- oder Wandpaneele zum Beispiel in geschlossenen Räumen eingesetzt werden können, ist somit bei Ausfall der Beleuchtung ein Hinweis über Fluchtwege und Fluchtrichtung möglich.

Die leitfähigen Substanzen können ausgewählt sein aus der Gruppe enthaltend Russ, Kohlefasern, Metallpulver, insbesondere Kohlenstoffnanoröhren. Es können auch Kombinationen dieser Substanzen zum Einsatz kommen.

Die verwendeten natürlichen oder synthetischen Fasern sind bevorzugt ausgewählt aus der Gruppe enthaltend Holzfasern, Zellulosefasern, partiell gebleichte Zellulosefasern, Wollfasern, Hanffasern und organische oder anorganische Polymerfasern.

Zur Verbesserung der Verteilung der Füllstoffe in der Harzschicht können Netzmittel bzw. Dispergieradditive zugegeben werden. Typische Netzmittel sind Tenside, Fettsäuren oder Derivate von Polysiloxanen.

Eine weitere Modifikation der (Hybrid)harzschicht kann im Einbringen von Strukturen wie z.B. Vertiefungen oder Erhöhungen in die (Hybrid)harzschicht bestehen. Derartige Strukturen können mit strukturierten Pressblechen in der (Hybrid)harzschicht erzeugt werden, die wenn nötig und/oder gewünscht den verwendeten Dekoren angepasst werden können. Derartige Methoden zur Strukturierung von Oberflächen sind z.B. aus der EP 2 251 501 B1 bekannt.

In einer Ausführungsform der vorliegenden Holzwerkstoffplatte wird die mindestens eine aufgedruckte Dekorschicht im Digitaldruck- und/oder Tiefdruckverfahren auf die mindestens eine Trägerplatte aufgebracht.

Durch das unmittelbare Aufdrucken einer Dekorschicht wird die Oberfläche der vorliegenden Holzwerkstoffplatten durch Verwendung von unterschiedlichsten Motiven aufgewertet. Dabei ist von besonderem Vorteil, dass für eine Verwendung im Bereich der Bodenbeläge und Möbel die Trägerplatte aufgrund der darin verarbeiteten Holzfasern bereits von Natur aus mit einer leicht bräunlichen Grundfarbe ausgestattet sind. Üblicherweise wird von einer möglichst hellen und definierten Grundfarbe ausgegangen. Da die Farbe der Trägerplatten, wie MDF-Trägerplatten, schwankt, ist es vorteilhaft, wenn diese Farbe durch eine immer gleiche Druckbasis überdeckt wird. Ansonsten müsste immer eine farbliche Anpassung des Drucks erfolgen.

Als Drucktechniken ist es vorteilhaft, Tiefdruck- und Digitaldruckverfahren anzuwenden. Das Tiefdruckverfahren ist eine Drucktechnik, bei der die abzubildenden Elemente als Vertiefungen in einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand, wie zum Beispiel ein Trägermaterial, übertragen. Hingegen wird beim Digitaldruck das Druckbild direkt von einem Computer in eine Druckmaschine, wie zum Beispiel einen Laserdrucker oder Tintenstrahldrucker, übertragen. Dabei entfällt die Verwendung einer statischen Druckform. In beiden Verfahren ist die Verwendung von wässrigen Farben und Tinten oder farbgebender Mittel auf UV-Basis möglich.

Ebenfalls ist es vorstellbar, die genannten Drucktechniken aus Tief- und Digitaldruck zu kombinieren. Eine geeignete Kombination der Drucktechniken kann zum einen unmittelbar auf der Trägerplatte bzw. der zu bedruckenden Schicht erfolgen oder auch vor dem Drucken durch Anpassung der verwendeten elektronischen Datensätze.

So ist es zum Beispiel denkbar, die in der EP 24 52 829 A1 beschriebene Methode auf die vorliegenden Holzwerkstoffplatten anzuwenden. Hierbei wird zunächst ein erstes Dekor auf eine gegebenenfalls vorbehandelte Oberfläche der Holzwerkstoffplatte im Tiefdruckverfahren aufgedruckt und in einem zweiten, sich unmittelbar anschließenden Schritt ein zweites im Digitaldruck erzeugtes Dekor aufgedruckt.

In einer Ausführungsform des vorliegenden Verfahrens wird auf die zu bedruckende Seite der Trägerplatte vor dem Bedrucken mindestens eine Grundierungsschicht umfassend mindestens ein Harz und/oder mindestens einen Lack aufgetragen, die anschließend angetrocknet und/oder angehärtet wird.

Dabei wird bevorzugterweise zur Grundierung eine wässrige Harzlösung und/oder eine strahlenhärtbare Spachtelmasse auf die zu bedruckende Seite der Trägerplatte verwendet.

Im Falle der Vorbeschichtung bzw. Grundierung der Trägerplatte mit einer wässrigen Harzlösung kann eine wässrige Formaldehyd-haltige Harzlösung, insbesondere eine wässrige Lösung eines Melamin-Formaldehyd-Harzes, Harnstoff-Formaldehyd-Harzes oder Melamin-Harnstoff-Formaldehyd-Harz verwendet werden.

Die Auftragsmenge an flüssiger Harzlösung zur Grundierung kann zwischen 10 und 80 g/m², bevorzugt 20 und 50 g/m² betragen. Der Feststoffgehalt der wässrigen Harzlösung liegt zwischen 30 und 80%, bevorzugt 40 und 60%, insbesondere bevorzugt bei 55%. Das Flüssigharz kann zusätzlich geeignete Netzmittel, Härter, Trennmittel und Entschäumer aufweisen.

Nach Auftragen der wässrigen Harzlösung auf die Trägerplatte zur Vorbeschichtung bzw. Grundierung derselbigen wird das Flüssigharz auf eine Feuchte von 10%, bevorzugt 6% z.B. in einem Konvektionsofen oder Nahinfrarot-Ofen getrocknet.

In einer weiteren Ausführungsform wird vor dem Bedrucken der mindestens einen Seite der Trägerplatte mindestens eine Schicht einer wasserbasierten, pigmentierten Druckfarbe auf die zu bedruckende Seite der Trägerplatte aufgetragen. Die Druckfarbe kann entweder direkt auf die unbehandelte Oberfläche der Trägerplatte oder auch auf die Grundierung aufgetragen werden.

Die wasserbasierte pigmentierte Druckfarbe kann auch in mehr als einer Schicht aufgetragen werden (z.B. 3 bis 10 Schichten, bevorzugt 5 bis 8 Schichten), wobei nach jedem Schichtauftrag die Druckfarbe z.B. in einem Konvektionstrockner oder einem Nahinfrarot-Trockner getrocknet wird.

Im sich anschließenden Direktdruck, insbesondere Digitaldruck, wird zum Bedrucken der mindestens einen Seite der Trägerplatte bevorzugt eine wasserbasierte Digitaldrucktinte verwendet. Der Digitaldruck kann unter Verwendung eines Digitaldruckers mit einer wasserbasierten Digitaldrucktinte ausgeführt werden. Die Menge an verwendeter Digitaldrucktinte kann zwischen 5 und 10 g/m², bevorzugt 6 und 8 g/m² betragen.

In einer weitergehenden Ausführungsform der vorliegenden Holzwerkstoffplatte ist auf der der aufgedruckten Dekorschicht gegenüberliegenden Seite der Trägerplatte mindestens ein Gegenzug vorgesehen ist. Dadurch werden insbesondere die, durch die auf der Oberseite der Trägerplatte aufgebrachten Lagen wirkenden Zugkräfte ausgeglichen. In einer bevorzugten Ausführungsform wird der Gegenzug als Zelluloselage ausgeführt, die ebenfalls imprägniert ist. Beispielsweise kann der Gegenzug als ein mit einem wärmehärtbaren Kunstharz imprägniertes Papier ausgeführt sein.

Das mindestens eine Harz zur Beschichtung der mit einem Dekordruck versehenen Trägerplatte wird in einem Verfahren umfassend die folgenden Schritte hergestellt:
- Bereitstellen einer Suspension von mindestens einem Polymer ausgewählt aus einer Gruppe enthaltend Polyacrylate, Polyepoxide, Polyester, und Polyurethane;
- Zugabe von mindestens einer Silanverbindung der allgemeinen Formel (I) zu der Polymersuspension,
- Zugabe von mindestens einem Katalysator, insbesondere einer hydrolytisch aktiven Verbindung, zu der Mischung aus Polymer und Silanverbindung der allgemeinen Formel (I); und
- Zugabe von mindestens einem Formaldehyd-Harz zu der Mischung aus Polymer und Silanverbindung der allgemeinen Formel (I).

Entsprechend dem vorliegenden Verfahren werden die Silane, die je nach verwendeter Polymerart mit geeigneter Funktionalisierung ausgewählt werden, mit der wässrigen Polymersuspension gemischt und anschließend mit Hilfe eines Katalysators hydrolysiert und kondensiert. Hierbei kann das in der Suspension vorhandene Wasser genutzt werden oder falls die Suspension nicht ausreichend stabilisiert ist, weiteres Wasser hinzugegeben werden. Nach einer Rührzeit wird die Polymer- / Silan-Mischung dem Formaldehyd-Harz, z.B. Melamin-Formaldehyd-Harz zugegeben und wie ein normales Harz weiterverarbeitet.

Als hydrolytisch wirksame Verbindungen werden bevorzugt sauer oder basisch bzw. alkalisch reagierende Verbindungen eingesetzt.

Die sauer reagierenden Verbindungen können Substanzen ausgewählt aus der Gruppe enthaltend gesättigte oder ungesättigte Mono- und Polycarbonsäuren, insbesondere Octadecansäure, Acrylsäure, Methacrylsäure oder Crotonsäure, ss-Dicarbonylverbindungen, insbesondere Acetylaceton, oder Aminosäuren, organische Derivate der Schwefelsäure wie Alkylsulfate oder Fettalkoholsulfate, Ester der Sulfonsäuren wie Alkylsulfonsäuren und Alkylsulfonate, organische Phosphate wie (alkyl)ethoxylierte Phosphorsäuren oder Lecithin, Polysäuren, insbesondere Polyhydroxyasparaginsäure und Polyhydroxystearinsäure sein. Weitere Beispiele sind 1H,1H-Pentadecafluoroctanol, Octanol, Stearinsäure, Ölsäure, Hexansäurechlorid, Hexansäuremethylester, Hexylchlorid und Nonafluorbutylchlorid, verwendet werden.

Die alkalisch reagierenden Verbindungen sind bevorzugt ausgewählt aus der Gruppe enthaltend Mono- und Polyamine, insbesondere Methylamin, oder Ethylendiamin, Ammoniak, Alkali - und Erdalkalihydroxide, insbesondere NaOH.

In einer Variante des obigen Verfahrens wird das Harz zusätzlich mit Netzmitteln, Füllstoffen und/oder weiteren Additiven vermischt.

Die vorliegende Holzwerkstoffplatte wird in einem Verfahren umfassend die folgenden Schritte hergestellt:
- Bereitstellen von mindestens einer mit einem Dekordruck versehenen Trägerplatte,
- Herstellen eines modifizierten Harzes mit den oben angeführten Komponenten ,
- Auftragen des modifizierten Harzes auf die mindestens eine mit einem Dekordruck versehene Trägerplatte, und
- Verpressen der mit dem modifizierten Harz beschichteten Trägerplatte in einer Presse.

In einer Ausführungsform des vorliegenden Verfahrens wird das modifizierte Harz bzw. die Harzzusammensetzung auf eine direktbedruckte Trägerplatte aufgerakelt (z.B. unter Verwendung eines Kastenrakels). Die Schichtdicke des aufgerakelten Harzes liegt zwischen 10 und 100 µm, bevorzugt zwischen 30 und 80 µm, insbesondere bevorzugt zwischen 30 und 60 µm. Das aufgerakelte Harz wird anschließend auf eine Feuchte von 6-8% z.B. unter Verwendung eines Konvektionstrockners oder NIR-Trockners getrocknet.

Die Harzschicht wird anschließend zusammen mit der bedruckten Trägerplatte unter üblichen Bedingungen (Taktzeit, Presstemperatur) verpresst. So kann das Harzgemisch bei einem Druck zwischen 3 und 8 MPa und einer Temperatur zwischen 150 und 250°C unter Ausbildung der Oberflächenschicht auf der Trägerplatte ausgehärtet werden.

Die Erfindung wird nachfolgend an mehreren Ausführungsbeispielen näher erläutert.

### Ausführungsbeispiel 1:

232 g einer 50 % igen wässrigen Polyurethan-Dispersion (Dancoll W150) wird vorgelegt. Es erfolgt die Zugabe von 15 g Methyltriethxoysilan, 2,4 g Tetraethoxysilan, sowie von 4,78 g Wasser und 0,4 g einer 10 % igen Essigsäure. Die Rührzeit beträgt ca. 60 Minuten.

Die so erhaltene Suspension wird anschießend zu einer wässrigen Melamin-FormaldehydLösung gegeben und erneut gerührt.

### Ausführungsbeispiel 2:

Zu einem handelsüblichen Melaminharz zur Imprägnierung von Dekorpapieren (Feststoffgehalt: ca. 55 Gew%) werden 10 % der Zusammensetzung des Ausführungsbeispiels 1 (Inosil 10; Feststoffgehalt: ca. 50 Gew%) zu gegeben.

Das Gemisch wird mit den benötigten Hilfsstoffen (Härter, Entschäumer, Netzmittel) mit Hilfe eines Kastenrakels (30 µ Schichtdicke) auf eine direktbedruckte HDF aufgerakelt. Das aufgerakelte Harz wird bis auf eine Feuchte von ca. 6 bis 8 % getrocknet und anschließend in einer Laborpresse bei 200°C, 40 bar und einer Preßzeit von zehn Sekunden incl. eines beharzten Gegenzug-Papiers (Melaminharz) verpresst. Als Referenz wurde eine Platte ohne Inosil 10 aber mit den Hilfsstoffen verpresst.

Beide Platten zeigten bezüglich der Transparenz keinerlei Unterschiede. Die Platte mit dem Inosil fühlte sich haptisch deutlich angenehmer an als die Platte ohne. Beide Proben wurden auf das Verhalten gegenüber Stoßbeanspruchung (große und kleine Kugel) geprüft. Die Ergebnisse sind in Tabelle 1 aufgelistet.

### Ausführungsbeispiel 3:

Zu einem handelsüblichen Melaminharz zur Imprägnierung von Dekorpapieren (Feststoffgehalt: ca. 55 Gew%) werden 10 % und 15% der Zusammensetzung des Ausführungsbeispiels 1 (Inosil 10; Feststoffgehalt: ca. 50 Gew%) zugegeben.

Das Gemisch wird mit den benötigten Hilfsstoffen (Härter, Entschäumer, Netzmittel) mit Hilfe eines Kastenrakels (60 µm Schichtdicke) auf eine direktbedruckte HDF aufgerakelt. Das aufgerakelte Harz wird bis auf eine Feuchte von ca. 6 bis 8 % getrocknet und anschließend in einer Laborpresse bei 200°C, 40 bar und einer Presszeit von zehn Sekunden incl. eines beharzten Gegenzug-Papiers (Melaminharz) verpresst. Als Referenz wurde eine Platte ohne Inosil 10 aber mit den Hilfsstoffen verpresst.

Auch hier zeigten die Platten bezüglich der Transparenz keinerlei Unterschiede. Die Platten mit dem Inosil 10 fühlten sich wiederum haptisch deutlich angenehmer an als die Platte ohne Wirkstoff. Alle drei Proben wurden auf das Verhalten gegenüber Stoßbeanspruchung (große und kleine Kugel) geprüft. Die Ergebnisse sind in Tabelle 1 aufgelistet.

| Probe | Schichtdicke in µm | Kleine Kugel in Newton | großer Kugelfalltest in mm |
|---|---|---|---|
| Standard | 30 | 7 | 800 |
| 10% Inosil 10 | 30 | 10 | 1000 |
| Standard | 60 | 8 | 1000 |
| 10% Inosil 10 | 60 | 12 | 1200 |
| 15% Inosil 10 | 60 | 12 | 1400 |

Wie Tabelle 1 zeigt, verbessert sich das Verhalten gegenüber Stoßbeanspruchung bei allen Varianten bei denen Inosil 10 zu gegeben wurde. Der Effekt ist umso stärker, je höher die Schichtdicke und umso höher der Anteil an Inosil 10 ist.

## Patentansprüche

1. Holzwerkstoffplatte mit modifizierter Harzschicht umfassend
- mindestens eine Trägerplatte,
- mindestens eine auf einer Seite der Trägerplatte aufgedruckte Dekorschicht, und
- mindestens eine auf der aufgedruckten Dekorschicht angeordnete Harzschicht, wobei die mindestens eine Harzschicht
- mindestens ein Formaldehydharz,
- mindestens ein Polymer ausgewählt aus einer Gruppe enthaltend Polyacrylate, Polyepoxide, Polyester, Polyurethane und langkettige Silanole, und
- mindestens eine silanhaltige Verbindung der allgemeinen Formel (I)
**RₐSiX₍₄₋ₐ₎** **(I)**,
und/oder deren Hydrolyseprodukt umfasst, wobei
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R ein nicht-hydroliserbarer organischer Rest R ist ausgewählt aus der Gruppe umfassend Alkyl, Aryl, Alkenyl, Alkinyl, Cycloalkyl, die durch -O- oder -NHunterbrochen sein können, und
- wobei R mindestens eine funktionelle Gruppe Q aufweisen kann, die ausgewählt ist aus einer Gruppe enthaltend eine Hydroxy-, Ether-, Amino-, Monoalkylamino-, Dialkylamino-, Anilino-, Amid-, Carboxy-, Mercapto-, Alkoxy-, Aldehyd-, Alkylcarbonyl-, Epoxid-, Alkenyl-, Alkinyl-, Acryl-, Acryloxy-, Methacryl-, Methacryloxy-, Cyano- und Isocyano-Gruppe, und
- a = 0, 1, 2, 3, insbesondere 0, 1 oder 2 ist.

2. Holzwerkstoffplatte nach Anspruch 1, **dadurch gekennzeichnet, dass** die Trägerplatte eine Platte aus einem Holzwerkstoff, einem Holzwerkstoff-Kunststoff-Gemisch oder einem Verbundwerkstoff, insbesondere eine Span-, mitteldichte Faser(MDF)-, hochdichte Faser (HDF)-, Grobspan (OSB)- oder Sperrholzplatte, eine Zementfaserplatte, Gipsfaserplatte und/oder eine WPC-Platte (wood plastic composite) ist.

3. Holzwerkstoffplatte nach Anspruch 1 oder 2, **dadurch gekennzeichnet, dass** das Formaldehyd-Harz ein Melamin-Formaldehyd-Harz, ein Melamin-Harnstoff-Formaldehyd-Harz oder ein Harnstoff-Formaldehyd-Harz ist.

4. Holzwerkstoffplatte nach einem der vorhergehenden Ansprüche, **dadurch gekennzeichnet, dass** Poly(metha)crylate als Polyacrylat, aliphatische Polyepoxide (Polyalkyldiepoxide) oder aromatische Polyepoxide als Polyepoxide, aliphatische Polyurethane als Polyurethane verwendet werden.

5. Holzwerkstoffplatte nach einem der vorhergehenden Ansprüche, **dadurch gekennzeichnet, dass** das Masseverhältnis von Formaldehydharz und Polymer in einem Bereich zwischen 20 : 80, bevorzugt 30 : 70, insbesondere bevorzugt 50 : 50 beträgt.

6. Holzwerkstoffplatte nach einem der vorhergehenden Ansprüche, **dadurch gekennzeichnet, dass** X ausgewählt ist aus einer Gruppe enthaltend OH, C₁₋₆-Alkoxy, insbesondere Methoxy, Ethoxy, n-Propoxy und Butoxy.

7. Holzwerkstoffe nach einem der vorhergehenden Ansprüche, **dadurch gekennzeichnet, dass** die mindestens eine Harzschicht mindestens zwei unterschiedliche Silane der allgemeinen Formel (I) umfasst.

8. Holzwerkstoffplatte nach einem der vorhergehenden Ansprüche, **dadurch gekennzeichnet, dass** mehr als eine Harzschicht, bevorzugt zwei, drei oder vier Harzschichten, auf der Dekorschicht auf der Trägerplatte angeordnet sind.

9. Holzwerkstoffplatte nach einem der vorhergehenden Ansprüche, **dadurch gekennzeichnet, dass** in der Harzschicht Nanopartikel mit einer Größe kleiner 500 nm enthalten sind.

10. Holzwerkstoffplatte nach einem der vorhergehenden Ansprüche, **dadurch gekennzeichnet, dass** die mindestens eine Harzschicht Füllstoffe, Netzmittel oder weitere Additive umfasst.

11. Holzwerkstoffplatte nach Anspruch 10, **dadurch gekennzeichnet, dass** die Füllstoffe ausgewählt sind aus einer Gruppe enthaltend Fasern, verschleißhemmende Materialien, leitfähige Substanzen, wärmeleitfähige Materialien, Materialien zur Anpassung der Haptik oder Materialien zur Reduzierung von Abdrücken.

12. Holzwerkstoffplatte nach einem der vorhergehenden Ansprüche, **dadurch gekennzeichnet, dass** die mindestens eine aufgedruckte Dekorschicht im Digitaldruck- und/oder Tiefdruckverfahren auf die mindestens eine Trägerplatte aufgebracht wird.

13. Holzwerkstoffplatte nach einem der vorhergehenden Ansprüche, **dadurch gekennzeichnet, dass** auf der der aufgedruckten Dekorschicht gegenüberliegenden Seite der Trägerplatte mindestens ein Gegenzug vorgesehen ist.

14. Verfahren zur Herstellung einer Holzwerkstoffplatte nach einem der vorhergehenden Ansprüche umfassend die Schritte:
- Bereitstellen von mindestens einer mit einem Dekordruck versehenen Trägerplatte,
- Herstellen eines modifizierten Harzes umfassend mindestens ein Formaldehydharz, mindestens ein Polymer ausgewählt aus einer Gruppe enthaltend Polyacrylate, Polyepoxide, Polyester, und Polyurethane und mindestens eine silanhaltige Verbindung der allgemeinen Formel (I),
- Auftragen des modifizierten Harzes auf die mindestens eine mit einem Dekordruck versehene Trägerplatte, und
- Verpressen der mit dem modifizierten Harz beschichteten Trägerplatte in einer Presse.

15. Verfahren nach Anspruch 14, **dadurch gekennzeichnet, dass** das modifizierte Harz zur Beschichtung der mit einem Dekordruck versehenen Trägerplatte in einem Verfahren umfassend die folgenden Schritte hergestellt wird:
- Bereitstellen einer Suspension von mindestens einem Polymer ausgewählt aus einer Gruppe enthaltend Polyacrylate, Polyepoxide, Polyester, und Polyurethane;
- Zugabe von mindestens einer Silanverbindung der allgemeinen Formel (I) zu der Polymersuspension,
- Zugabe von mindestens einem Katalysator, insbesondere einer hydrolytisch aktiven Verbindung, zu der Mischung aus Polymer und Silanverbindung der allgemeinen Formel (I); und
- Zugabe von mindestens einem Formaldehyd-Harz zu der Mischung aus Polymer und Silanverbindung der allgemeinen Formel (I).

## Claims

1. Wooden composite board with modified resin layer comprising
- at least one carrier board,
- at least one decorative layer printed on one side of the carrier board, and
- at least one resin layer arranged on the printed decorative layer, the at least one resin layer comprising
- at least one formaldehyde resin,
- at least one polymer selected from a group comprising polyacrylates, polyepoxides, polyesters, polyurethanes and long-chain silanols, and
- at least one silane-containing compound of the general formula (I)
RₐSiX₍₄₋ₐ₎ (I),
and/or hydrolysis product thereof, wherein
- X is H, OH or a hydrolyzable radical selected from the group consisting of halogen, alkoxy, carboxy, amino, monoalkylamino or dialkylamino, aryloxy, acyloxy, alkylcarbonyl,
- R is a non-hydrolyzable organic radical R is selected from the group comprising alkyl, aryl, alkenyl, alkinyl, cycloalkyl which may be interrupted by -O- or - NH-, and
- wherein R may have at least one functional group Q selected from the group consisting of hydroxy, ether, amino, monoalkylamino, dialkylamino, anilino, amide, carboxy, mercapto, alkoxy, aldehyde, alkylcarbonyl, epoxide, alkenyl, alkinyl, acrylic, acryloxy, methacrylic, methacryloxy, cyano and isocyano, and
- a = 0, 1, 2, 3, in particular 0, 1 or 2.

2. Wooden composite board according to claim 1, **characterized in that** the carrier board is a board made of a wood-based material, a wood-based material-plastic mixture or a composite material, in particular a chipboard, medium-density fibre (MDF), high-density fibre (HDF), coarse chipboard (OSB) or plywood board, a cement fibre board, gypsum fibre board and/or a WPC board (wood plastic composite).

3. Wooden composite board according to claim 1 or 2, **characterized in that** the formaldehyde resin is a melamine-formaldehyde resin, a melamine-urea-formaldehyde resin or a urea-formaldehyde resin.

4. Wooden composite board according to one of the preceding claims, **characterized in that** poly(metha)crylates are used as polyacrylates, aliphatic polyepoxides (polyalkyldiepoxides) or aromatic polyepoxides are used as polyepoxides, aliphatic polyurethanes are used as polyurethanes.

5. Wooden composite board according to one of the preceding claims, **characterized in that** the mass ratio of formaldehyde resin to polymer is in a range between 20 : 80, preferably 30 : 70, in particular preferably 50 : 50.

6. Wooden composite board according to one of the preceding claims, **characterized in that** X is selected from a group comprising OH, C1-6 alkoxy, in particular methoxy, ethoxy, n-propoxy and butoxy.

7. Wooden composite board according to one of the preceding claims, **characterized in that** the at least one resin layer comprises at least two different silanes of the general formula (I).

8. Wooden composite board according to one of the preceding claims, **characterized in that** more than one resin layer, preferably two, three or four resin layers, are arranged on the decorative layer on the carrier panel.

9. Wooden composite board according to one of the preceding claims, **characterized in that** the resin layer contains nanoparticles with a size of less than 500 nm.

10. Wooden composite board according to one of the preceding claims, **characterized in that** the at least one resin layer comprises fillers, wetting agents or further additives.

11. Wooden composite board according to claim 10, **characterized in that** the fillers are selected from a group comprising fibres, wear-inhibiting materials, conductive substances, heat-conductive materials, materials for adjusting the feel or materials for reducing impressions.

12. Wooden composite board according to one of the preceding claims, **characterized in that** the at least one printed decorative layer is applied to the at least one carrier board by digital printing and/or gravure printing.

13. Wooden composite board according to one of the preceding claims, **characterized in that** at least one backing is provided on the side of the carrier board opposite the printed decorative layer.

14. A Process for producing a wooden composite board according to one of the preceding claims comprising the steps:
- providing at least one carrier board provided with a decorative print,
- preparing a modified resin comprising at least one formaldehyde resin, at least one polymer selected from a group comprising polyacrylates, polyepoxides, polyesters and polyurethanes, and at least one silane-containing compound of the general formula (I),
- applying the modified resin to the at least one carrier board provided with a decorative print, and
- pressing of the carrier board coated with the modified resin in a press.

15. Process according to claim 14, **characterized in that** the modified resin for coating the carrier board provided with a decorative print is prepared in a method comprising the following steps:
- providing a suspension of at least one polymer selected from a group comprising polyacrylates, polyepoxides, polyesters, and polyurethanes;
- adding at least one silane compound of the general formula (I) to the polymer suspension,
- adding at least one catalyst, in particular a hydrolytically active compound, to the mixture of polymer and silane compound of the general formula (I); and
- adding at least one formaldehyde resin to the mixture of polymer and silane compound of the general formula (I).

## Revendications

1. Panneau en matériau dérivé du bois avec une couche de résine modifiée, comprenant
- au moins un panneau de support,
- au moins une couche décorative imprimée sur un côté du panneau de support, et
- au moins une couche de résine disposée sur la couche décorative imprimée, dans lequel l'au moins une couche de résine comprend
- au moins une résine de formaldéhyde,
- au moins un polymère choisi parmi un groupe contenant des polyacrylates, des polyépoxydes, des polyesters, des polyuréthanes et des silanols à longue chaîne, et
- au moins un composé silané de la formule générale (I)
**RₐSiX₍₄₋ₐ₎** **(I)**,
et/ou leur produit d'hydrolyse, dans lequel
- X est H, OH ou un radical hydrolysable choisi parmi le groupe comprenant l'halogène, l'alcoxy, le carboxy, l'amino, le monoalkylamino ou le dialkylamino, l'aryloxy, l'acyloxy, l'alkylcarbonyle,
- R est un radical R organique non hydrolysable choisi parmi le groupe comprenant l'alkyle, l'aryle, l'alcényle, l'alcynyle, le cycloalkyle, qui peuvent être interrompus par -O- ou -NH-, et
- dans lequel R peut présenter au moins un groupe fonctionnel Q, qui est choisi parmi un groupe contenant un groupe hydroxy, un groupe éther, un groupe amino, un groupe monoalkylamino, un groupe dialkylamino, un groupe anilino, un groupe amide, un groupe carboxy, un groupe mercapto, un groupe alcoxy, un groupe aldéhyde, un groupe alkylcarbonyle, un groupe époxy, un groupe alcényle, un groupe alcynyle, un groupe acryle, un groupe acryloxy, un groupe méthacryle, un groupe méthacryloxy, un groupe cyano et un groupe isocyano, et
- a = 0, 1, 2, 3, est en particulier 0, 1 ou 2.

2. Panneau en matériau dérivé du bois selon la revendication 1, **caractérisé en ce que** le panneau de support est un panneau composé d'un matériau dérivé du bois, d'un mélange de matériau dérivé du bois - matière plastique ou d'un matériau composite, en particulier un panneau aggloméré, à fibres à densité moyenne (MDF), à fibres à densité élevée (HDF), de grandes particules orientées (OSB) ou de contreplaqué, un panneau à fibres de ciment, un panneau à fibres de plâtre et/ou un panneau WPC (wood plastic composite).

3. Panneau en matériau dérivé du bois selon la revendication 1 ou 2, **caractérisé en ce que** la résine de formaldéhyde est une résine de mélamine-formaldéhyde, une résine de mélamine-urée-formaldéhyde ou une résine d'urée- formaldéhyde.

4. Panneau en matériau dérivé du bois selon l'une quelconque des revendications précédentes, **caractérisé en ce que** sont utilisés en tant que polyacrylate des poly(méth)acrylates, en tant que polyépoxydes des polyépoxydes aliphatiques (polyalkyldiépoxydes) ou des polyépoxydes aromatiques, en tant que polyuréthanes des polyuréthanes aliphatiques.

5. Panneau en matériau dérivé du bois selon l'une quelconque des revendications précédentes, **caractérisé en ce que** le rapport massique entre la résine de formaldéhyde et le polymère est situé dans une plage entre 20:80, de manière préférée 30:70, de manière particulièrement préférée 50:50.

6. Panneau en matériau dérivé du bois selon l'une quelconque des revendications précédentes, **caractérisé en ce que** X est choisi parmi un groupe contenant OH, alcoxy en C₁-C₆, en particulier méthoxy, éthoxy, n-propoxy et butoxy.

7. Panneau en matériau dérivé du bois selon l'une quelconque des revendications présentes, **caractérisé en ce que** l'au moins une couche de résine comprend au moins deux silanes différents de la formule générale (I).

8. Panneau en matériau dérivé du bois selon l'une quelconque des revendications précédentes, **caractérisé en ce que** plus d'une couche de résine, de manière préférée deux, trois ou quatre couches de résine, sont disposées sur la couche décorative sur le panneau de support.

9. Panneau en matériau dérivé du bois selon l'une quelconque des revendications précédentes, **caractérisé en ce que** des nanoparticules avec une taille inférieure à 500 nm sont contenues dans la couche de résine.

10. Panneau en matériau dérivé du bois selon l'une quelconque des revendications précédentes, **caractérisé en ce que** l'au moins une couche de résine comprend des charges, des agents mouillants ou d'autres additifs.

11. Panneau en matériau dérivé du bois selon la revendication 10, **caractérisé en ce que** les charges sont choisies parmi un groupe contenant des fibres, des matériaux empêchant l'usure, des substances conductrices, des matériaux thermoconducteurs, des matériaux servant à adapter l'aspect ou des matériaux pour réduire des empreintes.

12. Panneau en matériau dérivé du bois selon l'une quelconque des revendications précédentes, **caractérisé en ce que** l'au moins une couche décorative imprimée est appliquée sur l'au moins un panneau de support lors du procédé d'impression numérique et/ou par héliogravure.

13. Panneau en matériau dérivé du bois selon l'une quelconque des revendications précédentes, **caractérisé en ce qu'**au moins une contre-portée est prévue sur le côté, faisant face à la couche décorative imprimée, du panneau de support.

14. Procédé servant à fabriquer un panneau en matériau dérivé du bois selon l'une quelconque des revendications précédentes, comprenant les étapes suivantes :
- de fourniture d'au moins un panneau de support pourvu d'une impression décorative,
- de fabrication d'une résine modifiée comprenant au moins une résine de formaldéhyde, au moins un polymère choisi parmi un groupe contenant des polyacrylates, des polyépoxydes, des polyesters et des polyuréthanes, et au moins un composé silané de la formule générale (I),
- d'application de la résine modifiée sur l'au moins un panneau de support pourvu d'une impression décorative, et
- de compression du panneau de support revêtu de la résine modifiée dans une presse.

15. Procédé selon la revendication 14, **caractérisé en ce que** la résine modifiée est fabriquée pour recouvrir le panneau de support pourvu d'une impression décorative lors d'un procédé comprenant les étapes suivantes :
- de fourniture d'une suspension d'au moins un polymère choisi parmi un groupe contenant des polyacrylates, des polyépoxydes, des polyesters et des polyuréthanes ;
- d'ajout d'au moins un composé silané de la formule générale (I) à la suspension de polymère,
- d'ajout d'au moins un catalyseur, en particulier d'un composé actif hydrolytiquement, au mélange composé d'un polymère et d'un composé à base de silane de la formule générale (I), et
- d'ajout d'au moins une résine de formaldéhyde au mélange composé d'un polymère et d'un composé à base de silane de la formule générale (I).
